# EUROPÄISCHE PATENTSCHRIFT

(11) **EP 1 099 846 B1**
(45) Veröffentlichungstag und Bekanntmachung des Hinweises auf die Patenterteilung: **12.01.2005**
(21) Anmeldenummer: 00810939.9
(22) Anmeldetag: 11.10.2000
(51) Int. Cl.: F02M 25/03, F02B 47/02

(54) **Verfahren zum Betreiben eines Viertakt-Dieselmotors**
Method for operating a four stroke diesel engine
Procédé de fonctionnement d'un moteur diesel à quatre temps

(30) Priorität: 10.11.1999 EP 99811033
(43) Veröffentlichungstag der Anmeldung: 16.05.2001
(73) Patentinhaber: Wärtsilä Schweiz AG, 8401 Winterthur (CH)
(72) Erfinder: Ruch, Henri, 8553 Mettendorf (CH)
(74) Vertreter: Sulzer Management AG

(56) Entgegenhaltungen:
- EP-A- 0 553 364
- DE-A- 3 237 305
- DE-A- 4 301 887
- US-A- 5 832 880
- US-A- 5 875 743

## Beschreibung

Die Erfindung betrifft ein Verfahren zum Betreiben eines Viertakt-Dieselmotors gemäss dem Oberbegriff des unabhängigen Anspruchs sowie einen Viertakt-Dieselmotor, der mit diesem Verfahren betrieben wird.

Beim Betrieb von Dieselbrennkraftmaschinen entstehen im allgemeinen beträchtliche Mengen von umweltbelastenden Stickstoffoxiden (NOx). Dies trifft insbesondere auch für Grossdieselmotoren zu, wie sie beispielsweise als Hauptantriebsaggregate für Schiffe oder als Stationäranlagen zur Stromgewinnung eingesetzt werden. Zum Schutz der Umwelt sind daher erhebliche Anstrengungen unternommen worden, Dieselmotoren mit deutlich reduzierter NOx-Emission zu entwickeln. Die Verminderung der NOx-Emission kann beispielsweise mittels selektiver katalytischer Reduktion der Stickstoffoxide realisiert werden. Insbesondere bei Grossdieselmotoren, ist es aber häufig aus Platzgründen sehr schwierig - wenn überhaupt möglich -, entsprechend dimensionierte Katalysatorvorrichtungen vorzusehen. Daher hat man sich unter anderem auf die Entwicklung von sogenannten Primärmassnahmen konzentriert, bei welchen das Entstehen der Stickstoffoxide im Brennraum des Zylinders vermindert wird.

Bei Dieselmotoren ist es eine bekannte Massnahme, ausser dem Brennstoff auch Wasser in den Brennraum einzuspritzen, um so die Verbrennungstemperatur, insbesondere die an der Flamme auftretende Spitzentemperatur, herabzusetzen, woraus eine Reduzierung der NOx-Bildung und damit der NOx-Emission des Motors resultiert. Das Wasser wird während oder schon kurz vor der Verbrennung in den Brennraum des Zylinders eingespritzt. Bei Viertakt-Dieselmotoren ist es üblich, das Wasser gegen Ende des Kompressionstakts z. B. zeitgleich mit dem Brennstoff einzuspritzen. Das Wasser kann vom Brennstoff getrennt in den Brennraum des Zylinders eingebracht werden, oder es wird zunächst eine Brennstoff-Wasser-Emulsion erzeugt, die dann in den Zylinder eingespritzt wird.

Ausgehend von diesem Stand der Technik ist es eine Aufgabe der Erfindung, ein einfaches Verfahren zum Betreiben eines Viertakt-Dieselmotors vorzuschlagen, mit welchem sich die Stickstoffoxid-Emission des Viertakt-Dieselmotors im Vergleich zu bekannten Betriebsverfahren noch weiter absenken lässt, ohne dass dafür ein grosser apparativer Aufwand oder ein grosser Kostenaufwand vonnöten ist.

Das diese Aufgabe lösende Verfahren zum Betreiben eines Viertakt-Dieselmotors ist durch die Merkmale des unabhängigen Verfahrensanspruchs gekennzeichnet.

Erfindungsgemäss wird also ein Verfahren zum Betreiben eines Viertakt-Dieselmotors vorgeschlagen, bei welchem Verfahren Wasser in einen Zylinder eingespritzt wird, in welchem ein Kolben hin- und herbewegbar angeordnet ist, und welcher Zylinder mindestens einen Auslass zum Abführen von Abgasen sowie mindestens einen Einlass zum Zuführen von Luft aufweist, wobei während des Ausschiebetakts des Kolbens der Auslass geschlossen wird, sodass der Auslass bereits verschlossen ist, bevor der Kolben am Ende des Ausschiebetakts den oberen Leertotpunkt erreicht, und wobei Wasser in den Zylinder eingespritzt wird, wenn sich der Kolben im Bereich des oberen Leertotpunkts befindet.

Da der Auslass des Zylinders bereits verschlossen ist, bevor der Kolben am Ende des Ausschiebetakts den oberen Leertotpunkt erreicht, wird jeweils ein Teil der beim vorgängigen Verbrennungsprozess enstandenen Abgase im Zylinder zurückbehalten. In die noch heissen Abgase wird Wasser eingespritzt, wenn sich der Kolben im Bereich des oberen Leertotpunkts befindet. Daraus resultiert eine sehr gute Verdampfung des eingespritzten Wassers und eine effiziente Abkühlung der noch im Zylinder befindlichen Abgase. Beim anschliessenden Ansaugtakt strömt Frischluft in den Zylinder, die ein Gemisch mit den zurückbehaltenen Abgasen und dem Wasserdampf bildet. Dieses Gemisch hat im Vergleich zur Frischluft eine verminderte Sauerstoffkonzentration. Das Gemisch wird beim folgenden Kompressionstakt verdichtet. Am Ende des Kompressionstakts wird Brennstoff in das Gemisch eingespritzt. Aufgrund der verminderten Sauerstoffkonzentration des Gemischs und des darin enthaltenen Wasserdampfs entstehen beim anschliessenden Verbrennungsprozess deutlich weniger Stickstoffoxide, wodurch ein schadstoffarmer Betrieb des Dieselmotors ermöglicht wird. Zudem ist das erfindungsgemässe Verfahren ohne bedeutenden Zusatzaufwand durchführbar, was unter wirtschaftlichen Aspekten vorteilhaft ist.

Bei dem erfindungsgemässen Verfahren wird also bewusst eine verschlechterte bzw. reduzierte Spülung in dem Sinne realisiert, dass die Ausspülung der Abgase aus dem Zylinder unvollständig ist. Durch die Kombination dieses Zurückbehaltens von Abgasen im Zylinder, das als interne Abgasrezirkulation bezeichnet werden kann, mit der Wassereinspritzung wird die Bildung von Stickstoffoxiden beim Verbrennungsprozess deutlich reduziert, ohne dass dafür Zugeständnisse an die Wirtschaftlichkeit des Motors notwendig sind. Bei dem erfindungsgemässen Verfahren tragen sowohl die zurückgehaltenen Abgase als auch der Wasserdampf zur Verminderung der NOx-Bildung bei.

Da die Wassereinspritzung in den Zylinder erfolgt, wenn sich der Kolben im Bereich seines oberen Leertotpunkts befindet, resultiert ferner der Vorteil, dass die Zylinderlauffläche vor einer Beaufschlagung mit Wasser geschützt ist, sodass das Wasser keinen nachteiligen oder schädlichen Einfluss auf den auf der Zylinderlauffläche befindlichen Ölfilm ausüben kann.

Die erzielte Abkühlung der heissen im Zylinder zurückgehaltenen Abgase lässt sich in einfacher Weise über die Menge des eingespritzten Wassers kontrollieren.

In der Praxis hat es sich als vorteilhaft erwiesen, dass der Auslass so geschlossen wird, dass er bei einem Kurbelwinkel von 30°± 20° vor dem oberen Leertotpunkt gerade ganz verschlossen ist. Hieraus resultiert eine günstige Menge von Abgas, das im Zylinder zurückbehalten wird. Diese Abgasmenge_ist über die Schliesszeitpunkte für den Auslass einstellbar bzw. regulierbar.

Bevorzugt wird der Einlass während des Ansaugtakts geöffnet, das heisst, nach Durchlaufen des oberen Leertotpunkts, sodass der Einlass noch verschlossen ist, wenn der Kolben sich im Bereich des oberen Leertotpunkts befindet. Durch diese Massnahme ist gewährleistet, dass der Einlass bzw. der Einlasskanal nicht durch zurückströmende Abgase verschmutzt wird. Es hat sich insbesondere als vorteilhaft erwiesen, den Einlass bei einem Kurbelwinkel von etwa 30° ± 20° nach dem oberen Leertotpunkt zu öffnen.

Vorzugsweise beginnt das Einspritzen des Wassers, nachdem der Auslass beim Ausschiebetakt verschlossen ist, und endet, bevor der Einlass beim Ansaugtakt geöffnet wird. Hierdurch lässt sich eine besonders effiziente Abkühlung der noch im Zylinder befindlichen heissen Abgase durch das eingespritze Wasser und eine besonders gute Verdampfung des eingespritzten Wassers erzielen.

Unter praktischen Aspekten ist es vorteilhaft, wenn das Einspritzen des Wassers über einen Kurbelwinkelbereich von etwa 20° vor dem oberen Leertotpunkt bis etwa 20° nach dem oberen Leertotpunkt erfolgt.

Als weitere vorteilhafte Massnahme zur Verminderung der beim Verbrennungsprozess entstehenden Stickstoffoxide kann zusätzlich während des Kompressionstakts und/oder während der Verbrennung Wasser in den Zylinder eingespritzt werden. Hierdurch lässt sich die Verbrennungstemperatur im Brennraum reduzieren.

Dieses Wasser kann während des Kompressionstakts gleichzeitig mit Brennstoff in den Zylinder eingespritzt werden.

Insbesondere im Hinblick auf den apparativen Aufwand und den am Zylinder zur Verfügung stehenden Platz kann es vorteilhaft sein, das Wasser mittels der gleichen Einspritzdüse in den Zylinder einzuspritzen, mit welcher der Brennstoff eingespritzt wird. Dazu kann die Einspritzdüse als sogenannte Tandemdüse ausgestaltet sein, die zwei getrennte Einspritzkanäle mit jeweils zugehörigen Düsenlöchern aufweist, wobei der eine Einspritzkanal für die Wassereinspritzung verwendet wird und der andere Einspritzkanal für die Brennstoffeinspritzung. Es ist aber auch möglich, eine konventionelle Einspritzdüse mit nur einem Einspritzkanal zu verwenden. Wenn sich der Kolben im Bereich des oberen Leertotpunkts befindet, wird durch diese Einspritzdüse Wasser in den Zylinder eingespritzt, was den zusätzlichen Vorteil einer Kühlung der Einspritzdüse mit sich bringt. Anschliessend wird gegen Ende des Kompressionstakts durch den gleichen Einspritzkanal Brennstoff oder eine Brennstoff-Wasser-Emulsion in den Brennraum des Zylinders eingespritzt.

Vorzugsweise wird das Wasser mit einem Druck von mindestens 200 bar eingespritzt, um eine möglichst feine Zerstäubung des Wassers zu erzielen.

Gemäss der Erfindung wird ferner ein Viertakt-Dieselmotor, vorgeschlagen, der mit einem erfindungsgemässen Verfahren betrieben wird.

Weitere vorteilhafte Massnahmen und bevorzugte Ausgestaltungen der Erfindungsgegenstände ergeben sich aus den abhängigen Ansprüchen.

Im Folgenden wird die Erfindung anhand von Ausführungsbeispielen und anhand der Zeichnung näher erläutert. In der schematischen Zeichnung zeigen:
- Fig. 1:: Einen Schnitt durch einen Zylinder eines Viertakt-Dieselmotor,
- Fig. 2:: ein Diagramm zur Veranschaulichung der Steuerzeiten zum Öffnen und Schliessen von Einlass und Auslass bei einem bekannten Verfahren zum Betreiben eines Viertakt-Dieselmotors, und
- Fig. 3:: wie Fig. 2, jedoch für ein Ausführungsbeispiel des erfindungsgemässen Verfahrens.

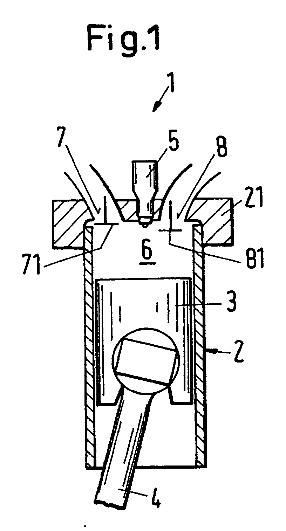

Fig. 1 zeigt in einer schematischen Darstellung einen Schnitt durch einen der üblicherweise mehreren Zylinder 2 eines Viertakt-Dieselmotors, beispielsweise eines Grossdieselmotors, der gesamthaft mit dem Bezugszeichen 1 bezeichnet ist. Der Zylinder 2 ist an seinem darstellungsgemäss oberen Ende von einem Zylinderdeckel 21 abgeschlossen. Im Zylinder 2 ist ein Kolben 3 hin- und herbewegbar angeordnet. Der Kolben 3 ist über eine Pleuelstange 4 mit einer Kurbelwelle verbunden. Im Zylinderdeckel 21 ist eine zentral angeordnete Einspritzdüse 5 vorgesehen, mittels welcher Brennstoff in den Brennraum 6 des Zylinders eingespritzt werden kann. Ferner sind im Zylinderdeckel 21 mindestens ein Auslass 7 zum Abführen von Verbrennungsgasen und ein Einlass 8 zum Zuführen von Luft, die üblicherweise als Ladeluft bezeichnet wird, vorgesehen. Bei dem hier beschriebenen Viertakt-Dieselmotor 1 sind jeweils zwei Auslässe 7 und zwei Einlässe 8 vorgesehen, die um die Einspritzdüse 5 herum angeordnet sind. In Fig. 1 ist nur ein Auslass 7 und ein Einlass 8 zu sehen. Für jeden Auslass 7 bzw. für jeden Einlass 8 ist jeweils ein Auslassventil 71 bzw. ein Einlassventil 81 vorgesehen, mit dem der Auslass 7 bzw. der Einlass 8 geöffnet und verschlossen werden kann.

Das Viertaktverfahren umfasst bekanntermassen die vier folgenden Takte: einen Ansaugtakt, bei welchem sich der Kolben 3 vom oberen Totpunkt zum unteren Totpunkt bewegt und Frischluft in den Zylinder 2 gesaugt wird, einen Kompressionstakt, bei welchem sich der Kolben 3 vom unteren zum oberen Totpunkt bewegt und an dessen Ende Brennstoff in den Brennraum 6 eingespritzt wird, einen Expansionstakt, bei welchem sich der Kolben 3 vom oberen zum unteren Totpunkt bewegt, sowie einen Ausschiebetakt, bei welchem sich der Kolben 3 vom unteren zum oberen Totpunkt bewegt und die Abgase aus dem Zylinder 2 ausschiebt.

Zur besseren Unterscheidung wird im Folgenden der obere Totpunkt, welchen der Kolben 3 zwischen dem Ausschiebetakt und dem Ansaugtakt durchläuft, und bei dem keine Brennstoffeinspritzung in den Zylinder erfolgt, als oberer Leertotpunkt (Leer-OTP) bezeichnet. Dagegen wird der obere Totpunkt, welchen der Kolben 3 zwischen dem Kompressionstakt und dem Expansionstakt durchläuft, und bei welchem Brennstoff in den Zylinder 2 eingespritzt wird, als oberer Zündtotpunkt (Zünd-OTP) bezeichnet.

Wie allgemein üblich, wird im Folgenden die Stellung des Kolbens 3 im Zylinder 2 durch den Kurbelwinkel KW beschrieben. Konventionsgemäss ist der Kurbelwinkel KW = 0° bzw. 360° bzw. 720°, wenn sich der Kolben 3 im oberen Totpunkt befindet und KW = 180° bzw. 540°, wenn sich der Kolben 3 im unteren Totpunkt befindet. Ein kompletter Arbeitszyklus erstreckt sich also von KW=0° bis KW=720° (zwei Umdrehungen).

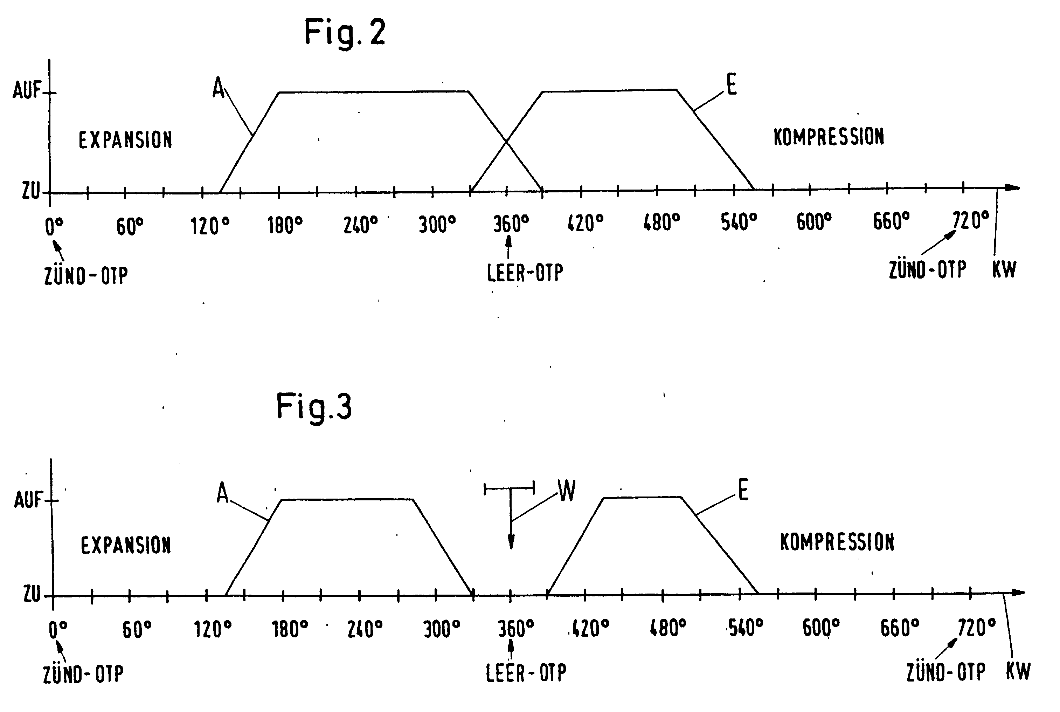

Fig. 2 zeigt ein Diagramm zur Veranschaulichung der Steuerzeiten zum Öffnen und Schliessen von Einlass 8 und Auslass 7 bei einem bekannten Verfahren zum Betreiben eines Viertakt-Dieselmotors. Auf der horizontalen Achse ist der Kurbelwinkel KW in Grad aufgetragen und auf der vertikalen Achse die beiden Zustände "AUF" und "ZU" für den Auslass 7 und den Einlass 8. Mit A ist die Kurve für den Auslass 7 bezeichnet und mit E die Kurve für den Einlass 8.

Das Diagramm beginnt auf der linken Seite bei dem Kurbelwinkel KW=0°, bei dem sich der Kolben 3 im Zünd-OTP befindet. Das Brennstoff-Luft-Gemisch im Brennraum 6 entzündet sich. Im Verlauf des anschliessenden Expansionstakts wird bei einem Kurbelwinkel KW=135° mit dem Öffnen des Auslasses 7 begonnen. Beim Durchlaufen des unteren Totpunkt (KW=180°) ist der Auslass ganz geöffnet. Der Ausschiebetakt beginnt. Während des Ausschiebetakts, bei dem die Abgase aus dem Zylinder 2 ausgeschoben werden, wird bei KW=330°, also 30° vor dem Leer-OTP mit dem Schliessen des Auslasses 7 und dem Öffnen des Einlasses 8 begonnen. Der Kolben 3 durchläuft den Leer-OTP (KW=360°) und der Ansaugtakt beginnt. Bei einem Kurbelwinkel KW=390° ist der Auslass 7 gerade ganz verschlossen und der Einlass 8 gerade ganz geöffnet. Es ist zu erkennen, dass im Kurbelwinkelbereich von 30° vor dem Leer-OTP bis 30° nach dem Leer-OTP sowohl der Auslass 7 als auch der Einlass 8 teilweise geöffnet sind. In diesem Bereich erfolgt die Spülung des Zylinders 2, das heisst durch den schon teilweise geöffneten Einlass 8 kann bereits Frischluft in den Zylinder 2 einströmen, die sich dort mit den Resten der-Abgase vermischt und mit diesen zusammen ausgeschoben wird, weil der Auslass 7 noch nicht ganz verschlossen ist. Nachdem beim Ansaugtakt der Auslass 7 ganz verschlossen ist (KW=390°), beginnt das Laden des Zylinders 2 mit Frischluft. Im weiteren Verlauf des Ansaugtakts wird-bei einem Kurbelwinkel KW=495° mit dem Schliessen des Einlasses 8 begonnen. Kurz nach Durchlaufen des unteren Totpunkts (KW=540°) ist der Einlass 8 vollständig geschlossen. Beim nun folgenden Kompressionstakt wird die Frischluft im Zylinder 2 komprimiert. Gegen Ende des Kompressionstakts erfolgt die Einspritzung des Brennstoffs in die komprimierte Frischluft. Im Bereich des Zünd-OTP (KW=720°; rechts in Fig. 2) entzündet sich das Brennstoff-Luft-Gemisch und der Zyklus beginnt von vorne.

Fig. 3 veranschaulicht in einer zu Fig. 2 analogen Darstellung ein bevorzugtes Ausführungsbeispiel des erfindungsgemässen Verfahrens zum Betreiben eines Viertakt-Dieselmotors. Die Bezugszeichen haben die gleiche Bedeutung wie in Fig. 2.

Während des Expansionstakts wird bei einem Kurbelwinkel KW=135° mit dem Öffnen des Auslasses 7 begonnen. Beim Erreichen des unteren Totpunkts (KW=180°) ist der Auslass 7 gerade ganz geöffnet. Während des anschliessenden Ausschiebetakts wird bereits bei etwa KW=280° mit dem Schliessen des Auslasses 7 begonnen, sodass der Auslass 7 bereits bei einem Kurbelwinkel KW=330°, also 30° vor Erreichen des Leer-OTP, gerade ganz verschlossen ist. Während sich der Kolben 3 im Bereich des Leer-OTP (KW=360°) befindet, wird Wasser in den Brennraum 6 des Zylinders 2 eingespritzt, wie dies der Pfeil mit dem Bezugszeichen W symbolisch andeutet. Das Einspritzen des Wassers erfolgt vorzugsweise über einen Kurbelwinkelbereich von etwa 20° vor dem Leer-OTP bis etwa 20° nach dem Leer-OTP. Mit dem Öffnen des Einlasses 8 wird erst während des Ansaugtakts bei einem Kurbelwinkel KW=390° begonnen, das heisst, der Einlass 8 ist noch vollständig verschlossen, wenn sich der Kolben 3 im Leer-OTP befindet. Bei einem Kurbelwinkel KW von etwa 435° ist der Einlass 8 vollständig geöffnet. Gegen Ende des Ansaugtakt wird bei einem Kurbelwinkel KW=495° mit dem Schliessen des Einlasses 8 begonnen. Nach Durchlaufen des unteren Totpunkts (KW=540°) ist der Einlass 8 bei einem Kurbelwinkel KW=555° gerade ganz verschlossen. Anschliessend beginnt die Komprimierung, an deren Ende Brennstoff in den Brennraum 6 eingespritzt wird. Im Bereich des Zünd-OTP (KW=720°; rechts in Fig. 3) entzündet sich das Gemisch und ein neuer Expansionstakt beginnt.

Durch die erfindungsgemässe Massnahme, den Auslass 7 so während des Ausschiebetakts zu schliessen, dass der Auslass 7 bereits vor Erreichen des Leer-OTP vollständig verschlossen ist, wird ein Teil der beim letzten Verbrennungsprozess entstandenen Abgase im Zylinder 2 zurückbehalten. Beim Durchlaufen des Leer-OTP, also zeitlich deutlich von der Verbrennung getrennt, wird in diese zurückbehaltenen, noch heissen Abgase Wasser mit hohem Druck von etwa 200 bar -1000 bar eingespritzt. Das Wasser zerstäubt, verdampft in den heissen Abgasen und kühlt diese ab. Es entsteht ein Gemisch von Abgasen und Wasserdampf, das sich während des Ansaugtakts mit der durch den Einlass 8 einströmenden Frischluft vermischt. Dieses Abgas-Wasserdampf-Frischluft-Gemisch wird im anschliessenden Kompressionstakt komprimiert. Gegen Ende des Kompressionstakt wird in dieses Gemisch Brennstoff eingespritzt. Im Bereich des Zünd-OTP erfolgt dann die Verbrennung. Da das komprimierte Gemisch aus Abgasen, Wasserdampf und Frischluft im Vergleich zu Frischluft einen deutlich geringeren Sauerstoffgehalt aufweist, entstehen beim Verbrennungsprozess deutlich weniger Stickstoffoxide. Zusätzlich wird die Bildung von NOx durch den Wasserdampfgehalt des komprimierten Gemischs vermindert.

Für die Einspritzung des Wassers sind mehrere Varianten möglich. So kann beispielsweise im Zylinderdeckel 21 eine separate Wassereinspritzdüse vorgesehen sein. Auch ist es möglich, das Wasser mittels der gleichen Einspritzdüse 5 in den Zylinder 2 einzuspritzen, mit welcher der Brennstoff eingespritzt wird. Das heisst, wenn der Kolben 3 den Leer-OTP durchläuft, wird mittels der Einspritzdüse 5 Wasser in den Brennraum 6 eingespritzt, und wenn sich der Kolben 3 dem Zünd-OTP nähert wird mittels der gleichen Einspritzdüse 5 Brennstoff eingespritzt. Eine weitere Möglichkeit besteht darin, als Einspritzdüse 5 eine Tandemdüse zu verwenden. Eine Tandemdüse weist zwei getrennte Einspritzkanäle mit jeweils zugehörigen Düsenlöchern auf, wobei der eine Einspritzkanal für die Wassereinspritzung verwendet wird und der andere Einspritzkanal für die Brennstoffeinspritzung.

Die erzielte Abkühlung der im Zylinder 2 zurückbehaltenen Abgase ist sehr einfach, nämlich über die Menge des eingespritzten Wassers, kontrollierbar. Auch die Menge der im Zylinder 2 zurückbehaltenen Abgase ist in einfacher Weise, nämlich über die Steuerzeiten für das Schliessen des Auslasses 7, einstellbar bzw. regulierbar, sodass die Verminderung der NOx-Bildung optimiert werden kann. In der Praxis hat es sich als besonders vorteilhaft erwiesen, den Auslass 7 während des Ausschiebetakts so zu schliessen, dass er bei einem Kurbelwinkel von 30° ± 20° vor dem oberen Leertotpunkt gerade ganz verschlossen ist.

Wie dies aus dem Diagramm in Fig. 3 hervorgeht, erfolgt das Schliessen des Auslasses 7 und das Öffnen des Einlasses 8 vorzugsweise symmetrisch zum Leer-OTP, das heisst, der Einlass 8 wird vorzugsweise während des Ansaugtakts bei einem Kurbelwinkel von 30° ± 20° nach dem Leer-OTP geöffnet, sodass der Einlass 8 noch verschlossen ist, wenn der Kolben 3 sich im Leer-OTP befindet. Insbesondere ist zu keinem Zeitpunkt des Arbeitszyklus sowohl der Auslass 7 als auch der Einlass 8 geöffnet. Die Massnahme des späten Öffnens des Einlasses 8 ist vorteilhaft, weil hierdurch ein Rückströmen von Abgasen durch den Einlass 8 in den sich anschliessenden Einlasskanal und somit eine Verunreinigung dieses Einlasskanals wirkungsvoll verhindert wird.

Die Wassereinspritzung zum Abkühlen der im Zylinder 2 zurückbehaltenen Abgase ist besonders effizient, wenn das Einspritzen des Wassers im Bereich des Leer-OTP erst dann beginnt, wenn der Auslass 7 schon vollständig verschlossen ist, und endet, bevor beim Ansaugtakt mit dem Öffnen des Einlasses 8 begonnen wird.

Vorzugsweise erfolgt die Wassereinspritzung symmetrisch zum Leer-OTP. Hierdurch ist nämlich gewährleistet, dass die Zylinderlauffläche möglichst gut durch den Kolben 3 vor einer Beaufschlagung mit Wasser geschützt ist. Somit wird eine nachteilige oder schädlichen Beeinflussung des Ölfilms, der sich auf der Zylinderlauffläche befindet, vermieden.

Gemäss einer vorteilhaften Variante des erfindungsgemässen Verfahrens kann ausser der Wassereinspritzung im Bereich des Leer-OTP auch noch während des Kompressionstakts und/oder während der Verbrennung Wasser in den Zylinder eingespritzt werden. Hierdurch lässt sich nämlich die Verbrennungstemperatur im Brennraum reduzieren, wodurch sich die Menge der beim Verbrennungsprozess entstehenden Stickstoffoxide noch weiter reduzieren lässt. Diese zweite Wassereinspritzung kann beispielsweise etwa bei der Hälfte des Kompressionshubs - also bei einem Kurbelwinkel von etwa 630° - beginnen. Diese zweite Wassereinspritzung kann parallel zur bzw. gleichzeitig mit der Brennstoffeinspritzung erfolgen und während des Verbrennungsprozesses fortgesetzt werden.

Durch die Erfindung wird also ein Verfahren zum Betreiben eines Viertakt-Dieselmotors vorgeschlagen, bei welchem bewusst und gezielt eine unvollständige Ausschiebung der Abgase aus dem Zylinder 2 realisiert wird, sodass ein Teil der beim Verbrennungsprozess enstehenden Abgase jeweils im Zylinder 2 zurückbehalten wird. Diese zurückbehaltenen Abgase werden durch eine Wassereinspritzung im Bereich des oberen Leertotpunkts abgekühlt. Durch das Zurückbehalten eines Teils der Abgase sowie den Wasserdampf entstehen beim anschliessenden Verbrennungsprozess deutlich weniger Stickstoffoxide, ohne dass dafür Zugeständnisse an die Wirtschaftlichkeit des Motors (z. B. Brennstoffverbrauch) vonnöten sind. Somit lässt sich die Bildung umweltbelastenden Schadstoffe deutlich reduziern. Ein zusätzlicher Vorteil dieses emissionsarmen Betriebsverfahrens ist es, dass es ohne grossen zusätzlichen Aufwand realisierbar ist.

## Patentansprüche

1. Verfahren zum Betreiben eines Viertakt-Dieselmotors, bei welchem Verfahren Wasser in einen Zylinder (2) eingespritzt wird, in welchem ein Kolben (3) hin- und herbewegbar angeordnet ist, und welcher Zylinder (2) mindestens einen Auslass (7) zum Abführen von Abgasen sowie mindestens einen Einlass (8) zum Zuführen von Luft aufweist, **dadurch gekennzeichnet, dass** während des Ausschiebetakts des Kolbens (3) der Auslass (7) geschlossen wird, sodass der Auslass (7) bereits verschlossen ist, bevor der Kolben (3) am Ende des Ausschiebetakts den oberen Leertotpunkt erreicht, und dass Wasser in den Zylinder (2) eingespritzt wird, wenn sich der Kolben (3) im Bereich des oberen Leertotpunkts befindet.

2. Verfahren nach Anspruch 1, bei welchem der Auslass (7) so geschlossen wird, dass er bei einem Kurbelwinkel (KW) von 30°± 20° vor dem oberen Leertotpunkt gerade ganz verschlossen ist.

3. Verfahren nach Anspruch 1 oder 2, bei welchem der Einlass (8) während des Ansaugtakts geöffnet wird, insbesondere bei einem Kurbelwinkel (KW) von etwa 30° ± 20° nach dem oberen Leertotpunkt, sodass der Einlass (8) noch verschlossen ist, wenn der Kolben (3) sich im oberen Leertotpunkt befindet.

4. Verfahren nach einem der vorangehenden Ansprüche, bei welchem das Einspritzen des Wassers beginnt, nachdem der Auslass (7) beim Ausschiebetakt verschlossen ist, und endet, bevor der Einlass (8) beim Ansaugtakt geöffnet wird.

5. Verfahren nach einem der vorangehenden Ansprüche, bei welchem das Einspritzen des Wassers über einen Kurbelwinkelbereich von etwa 20° vor dem oberen Leertotpunkt bis etwa 20° nach dem oberen Leertotpunkt erfolgt.

6. Verfahren nach einem der vorangehenden Ansprüche, bei welchem während des Kompressionstakts und/oder während der Verbrennung Wasser in den Zylinder (2) eingespritzt wird.

7. Verfahren nach Anspruch 6, bei welchem das Wasser während des Kompressionstakts gleichzeitig mit Brennstoff in den Zylinder (2) eingespritzt wird.

8. Verfahren nach einem der vorangehenden Ansprüche, bei welchem das Wasser mittels der gleichen Einspritzdüse (5) in den Zylinder (2) eingespritzt wird, mit welcher der Brennstoff eingespritzt wird.

9. Verfahren nach einem der vorangehenden Ansprüche, bei welchem das Wasser mit einem Druck von mindestens 200 bar eingespritzt wird.

10. Viertakt-Dieselmotor betrieben mit einem Verfahren gemäss einem der vorangehenden Ansprüche.

## Claims

1. Method for operating a four stroke diesel engine, in said method water being injected into a cylinder (2) in which a reciprocable piston (3) is arranged, and said cylinder (2) having at least one outlet (7) for conducting away exhaust gases as well as at least one inlet (8) for the supply of air, **characterized in that** said outlet (7) is closed during the exhaust stroke of the piston (3) so that the outlet (7) is already closed before the piston (3) reaches the upper idle dead center at the end of the exhaust stroke; and **in that** water is injected into the cylinder (2) when the piston (3) is located in the region of the upper idle dead center.

2. Method in accordance with claim 1, in which the outlet (7) is closed in such a manner that it is just completely closed at a crank angle (KW) of 30° ± 20° ahead of the upper idle dead center.

3. Method in accordance with claim 1 or claim 2, in which the inlet (8) is opened during the induction stroke, in particular at a crank angle (KW) of about 30° ± 20° after the upper idle dead center, so that the inlet (8) is still closed when the piston (3) is at the upper idle dead center.

4. Method in accordance with any one of the preceding claims, in which the injection of the water begins after the outlet (7) is closed during the exhaust stroke, and ends before the inlet (8) is opened during the induction stroke.

5. Method in accordance with any one of the preceding claims, in which the injection of the water takes place over a crank angle range of about 20° before the upper idle dead center to about 20° after the upper idle dead center.

6. Method in accordance with any one of the preceding claims, in which water is injected into the cylinder (2) during the compression stroke and/or during the combustion.

7. Method in accordance with claim 6, in which the water is injected into the cylinder (2) during the compression stroke at the same time as the fuel.

8. Method in accordance with any one of the preceding claims, in which the water is injected into the cylinder (2) by means of the same injection nozzle (5) with which the fuel is injected.

9. Method in accordance with any one of the preceding claims, in which the water is injected with a pressure of at least 200 bar.

10. Four stroke diesel engine which is operated by using a method in accordance with any one of the preceding claims.

## Revendications

1. Procédé d'exploitation d'un moteur diesel à quatre temps, dans lequel de l'eau est injectée dans un cylindre (2) dans lequel un piston (3) est disposé de façon mobile en alternance, et ce cylindre (2) présente au moins un échappement (7) pour évacuer des gaz d'échappement ainsi qu'au moins une admission (8) pour amener de l'air, **caractérisé en ce que** pendant le temps d'expulsion du piston (3), l'échappement (7) est fermé de sorte que l'échappement (7) est déjà fermé avant que le piston (3) n'atteigne le point mort haut à vide à la fin du temps d'expulsion, et **en ce que** de l'eau est injectée dans le cylindre (2) lorsque le piston (3) se trouve au niveau du point mort haut à vide.

2. Procédé selon la revendication 1, dans lequel l'échappement (7) est fermé de telle sorte qu'il est tout juste complètement fermé sous un angle de vilebrequin (KW) de 30° ±20° avant le point mort haut à vide.

3. Procédé selon la revendication 1 ou 2, dans lequel l'admission (8) est ouverte pendant le temps d'aspiration, en particulier sous un angle de vilebrequin (KW) d'environ 30° ±20° après le point mort haut à vide, de sorte que l'admission (8) est toujours fermée quand le piston (3) se trouve au point mort haut à vide.

4. Procédé selon l'une quelconque des revendications précédentes, dans lequel l'injection de l'eau commence après que l'admission (7) a été fermée au temps d'expulsion et se termine avant que l'admission (8) ne soit ouverte au temps d'aspiration.

5. Procédé selon l'une quelconque des revendications précédentes, dans lequel l'injection de l'eau a lieu à travers une plage d'angles de vilebrequin d'environ 20° avant le point mort haut à vide jusqu'à environ 20° après le point mort haut à vide.

6. Procédé selon l'une quelconque des revendications précédentes, dans lequel de l'eau est injectée dans le cylindre (2) pendant le temps de compression et/ou pendant la combustion.

7. Procédé selon la revendication 6, dans lequel l'eau est injectée dans le cylindre (2) en même temps que le carburant pendant le temps de compression.

8. Procédé selon l'une quelconque des revendications précédentes, dans lequel l'eau est injectée dans le cylindre (2) au moyen du même injecteur (5) que celui avec lequel le carburant est injecté.

9. Procédé selon l'une quelconque des revendications précédentes, dans lequel l'eau est injectée à une pression d'au moins 200 bar.

10. Moteur diesel à quatre temps, exploité par un procédé selon l'une quelconque des revendications précédentes.
